# FASCICULE DE BREVET EUROPEEN

(11) **EP 4 363 379 B1**
(45) Date de publication et mention de la délivrance du brevet: **01.04.2026**
(21) Numéro de dépôt: 22737631.6
(22) Date de dépôt: 24.06.2022
(51) Int. Cl.: C02F 1/28, C02F 1/44, B01D 61/14, C02F 1/78, B01D 65/02, B01D 65/08, C02F 101/30, C02F 103/34

(54) **PROCEDE DE TRAITEMENT D'EAU SUR MEMBRANES INTEGRANT UNE ADSORPTION SUR CHARBON ACTIF EN MICRO-GRAINS.**
VERFAHREN ZUR WASSERAUFBEREITUNG AUF MEMBRANEN MIT ADSORPTION AUF MIKROKÖRNIGER AKTIVKOHLE.
METHOD FOR WATER TREATMENT ON MEMBRANES COMPRISING ADSORPTION ON MICRO-GRAINED ACTIVATED CARBON.

(30) Priorité: 28.06.2021 FR 2106950
(43) Date de publication de la demande: 08.05.2024
(73) Titulaire: Veolia Water Solutions & Technologies Support, 94417 Saint-Maurice Cedex (FR)
(72) Inventeur: SAUVIGNET, Philippe, 35460 MAEN ROCH (FR)
(74) Mandataire: Cabinet Beau de Loménie
(86) Numéro de dépôt international: PCT/EP2022/067397
(87) Numéro de publication internationale: WO 2023/274885

(56) Documents cités:
- FR-A1- 3 015 463
- FR-A1- 3 075 780
- JP-A- 2006 223 921
- KR-B1- 100 473 532
- ANONYMOUS: "DATASHEET NORIT GAC 830", 1 December 2003 (2003-12-01), XP055892391, Retrieved from the Internet <URL:www.reskem.com/wp-uploads/2015/04/norit-gac830.pdf> [retrieved on 20220216]

## Description

### Domaine technique

La présente invention concerne le domaine du traitement des eaux.

Plus précisément, l'invention concerne un procédé de traitement d'eau en vue d'en abattre la teneur en matières organiques dont, le cas échéant, la teneur en micropolluants (pesticides, perturbateurs endocriniens, résidus de médicaments, résidus de produits industriels...) et en vue d'en éliminer les agents pathogènes (virus, bactéries et parasites).

Le procédé selon l'invention s'inscrit dans le cadre des procédés de traitement d'eau mettant en œuvre un réacteur membranaire.

Le procédé selon l'invention trouve son application notamment dans le domaine de la potabilisation de l'eau, dans le domaine du traitement tertiaire des eaux usées et dans le domaine du traitement des eaux industrielles en vue de leur rejet dans le milieu naturel ou de leur réutilisation.

### Art antérieur

Différents procédés, par exemple les procédés décrits dans le document JP2006223921 et le document KR100473532, sont mis en œuvre sur les eaux usées ou naturelles afin d'assurer leur épuration ou leur potabilisation. Leur objectif est de débarrasser les eaux, en tout ou partie, de la matière organique, des micropolluants, des microorganismes, des matières en suspension... qu'elles contiennent.

De tels procédés mettent en œuvre fréquemment en œuvre une étape de coagulation-floculation dans un premier réacteur suivie d'une étape d'adsorption sur un matériau pulvérulent adsorbant dans un second réacteur. Le charbon actif en poudre (CAP) est, selon une définition communément admise par l'homme de l'art, constitué de particules présentant une taille moyenne comprise entre 5 µm et 50 µm, préférentiellement entre 15 µm et 25 µm. Ce matériau est couramment utilisé à titre de matériau adsorbant car il présente de grandes capacités d'adsorption. Le CAP et les réactifs de coagulation-floculation sont ensuite séparés de l'eau traitée.

Les étapes de coagulation-floculation et d'adsorption permettent d'abattre considérablement la pollution contenue dans l'eau. Toutefois, ces procédés nécessitent des infrastructures, notamment un génie civil, importantes et par conséquent onéreuses. De plus, de tels procédés impliquent la nécessité de maîtriser finement les conditions de leurs mises en œuvre, notamment en ce qui concerne les concentrations en CAP au sein du séparateur et la gestion des pertes de ce matériau en sousverse de celui-ci afin de minimiser les quantités de CAP neuf à ajouter pour minimiser ces pertes. Tous ces éléments impactent de manière négative le rendement global de telles installations de traitement de l'eau et le coût de production de l'eau traitée.

D'autres procédés consistent à mettre en contact l'eau à traiter avec du CAP puis à séparer l'eau traitée du CAP par une filtration membranaire. Les membranes utilisées dans ce cadre peuvent notamment être des membranes de nanofiltration, d'ultrafiltration ou de microfiltration.

Bien qu'efficaces, ces procédés présentent l'inconvénient que le CAP qu'elles mettent en œuvre vient boucher les pores des membranes ou former un gâteau à leur surface. Celles-ci tendent ainsi à se colmater progressivement, induisant une augmentation de perte de charge et une réduction des flux de filtration à travers les membranes, et par conséquent une augmentation de la consommation d'énergie nécessaire. Le colmatage des membranes par le CAP, qui peut être en partie irréversible, tend également à réduire la durée de vie des membranes.

Pour lutter contre le colmatage des membranes immergées il est donc nécessaire de mettre en place des lavages réguliers de celles-ci utilisant principalement des produits chimiques tels que des solutions chlorées ou alcalines. Or, de telles solutions présentent l'inconvénient d'être potentiellement nocives pour l'environnement et il existe un besoin d'en réduire l'utilisation. De plus, ils réduisent aussi les capacités d'adsorption des CAP. Enfin, ces produits chimiques induisent un vieillissement prématuré des membranes.

On notera aussi qu'il est courant d'injecter de l'air à proximité des membranes pour les décolmater. Un inconvénient de ce type de technique est que le CAP tend à provoquer une usure mécanique de la surface des membranes particulièrement lorsque de l'air est injecté à proximité de celles-ci. Ce phénomène d'usure a pour première conséquence de diminuer la durée de vie des membranes et, corollairement l'efficacité de la filtration. Il est donc nécessaire de remplacer souvent ces membranes ce qui oblige à l'arrêt des installations.

Afin de résoudre ce problème technique consistant en l'abrasion des membranes de filtration par le CAP, il a été proposé dans FR3015463A1 de mettre en œuvre, dans le réacteur membranaire, des particules polymériques présentant un diamètre moyen compris entre 1 mm et 5 mm et une densité comprise entre 1,05 et 1,5 à une concentration comprise entre 1 g/L et 10 g/L et concomitamment d'agiter le mélange constitué d'eau, de CAP et de particules de polymère au sein du réacteur membranaire.

Selon cette technique, l'agitation du milieu les contenant à proximité des membranes permet aux particules polymériques de créer un écran protecteur sur celles-ci empêchant le CAP de coller à leur surface. Cet écran protecteur permet d'éviter, ou à tout le moins de limiter, le colmatage des pores des membranes par le CAP et permet concomitamment d'éviter que le CAP vienne frotter contre la surface des membranes de filtration. Le phénomène d'usure des membranes est ainsi en grande partie contenu tout en évitant leur colmatage.

Ainsi, selon cette technique, un matériau distinct du charbon actif, à savoir des particules polymériques, est utilisé pour empêcher la formation d'un gâteau de filtration et pour protéger les membranes de filtration et éviter le contact direct entre le les membranes et le CAP.

On notera que cette technique peut intégrer l'apport d'ozone, soit en amont du réacteur membranaire soit directement dans celui-ci, par exemple dans des filières de potabilisation d'eau. L'intérêt de l'ozone est non seulement lié au couplage du fort pouvoir oxydant de l'ozone aux grandes capacités d'adsorption du charbon actif, mais aussi à l'accélération de la décomposition de l'ozone en radicaux hydroxyles par le charbon actif.

Si cette technique présente une grande efficacité, elle présente aussi quelques inconvénients.

En effet, le CAP présente le désavantage de ne pouvoir être efficacement régénéré par voie thermique, c'est-à-dire qu'en l'état actuel des connaissances, il n'est pas possible, dans des conditions économiquement envisageables au stade industriel, de traiter le CAP saturé en composés adsorbés afin de restaurer ses capacités d'adsorption initiales. Même s'il peut être envisagé de nettoyer grossièrement le CAP, par exemple en faisant transiter l'eau le contenant dans un hydrocyclone, et de recycler le CAP ainsi nettoyé, les capacités d'adsorption du CAP s'épuisent assez vite et il est nécessaire de procéder régulièrement au remplacement de celui-ci.

Le mélange d'eau et de CAP épuisé extrait sous forme de boues des installations doit subir un traitement pour au moins fixer la pollution qu'il contient et préférentiellement éliminer cette pollution. Un tel traitement inclut généralement un épaississement et une déshydratation qui conduisent à d'importantes quantités de résidus solides. Ces résidus solides doivent ensuite préférentiellement faire l'objet de traitements supplémentaires pour dégrader la pollution qu'ils contiennent. Ces différentes étapes de traitement augmentent les couts d'exploitation des filières.

Par ailleurs, même si cette technique permet de limiter leur nombre, des lavages chimiques des membranes doivent néanmoins être régulièrement effectués afin de maintenir les performances de celles-ci. Comme indiqué ci-dessus, pour des raisons environnementales, il est souhaitable de réduire les quantités de produits chimiques mis en œuvre pour de tels lavages.

Enfin, d'autres inconvénients peuvent être constatés lorsque cette technique est mise œuvre en présence d'ozone. Que l'ozone soit injecté dans l'eau à traiter avant son arrivée dans le réacteur membranaire ou directement dans celui-ci, le transfert d'ozone dans l'eau n'est en effet souvent pas total et de l'ozone peut être retrouvé dans le ciel gazeux du réacteur membranaire. Pour protéger la santé des exploitants, il est alors nécessaire de couvrir le réacteur membranaire et d'ajouter un destructeur d'ozone sur l'évent. De plus, pour réduire les molécules d'ozone résiduelles dans l'eau en sortie du réacteur d'ozonation, il faut ajouter un réducteur, tel que le bisulfite de sodium. De plus, la séparation physique des étapes d'injection et d'adsorption implique un temps de contact eau à traiter/ozone élevé qui crée des conditions favorables à la formation de sous-produits d'ozonation, tels que les bromates qui commencent à se former après 2 à 3 minutes de contact, mais aussi de sous-produits issus de la matière organique présente dans l'eau, telle que la N-nitrosodiméthylamine (NDMA). Ces sous-produits ne sont pas toujours adsorbables sur les particules de charbon actif et peuvent s'accumuler dans l'eau en sortie de l'étape d'adsorption. Il est donc important d'éviter leur formation.

### Objectifs de l'invention

Un objectif de la présente invention est de proposer un procédé de traitement d'eau pour abattre la teneur en pollution organique dissoute et en micropolluants de cette eau par adsorption sur du charbon actif qui réduise significativement les quantités de charbon actif neuf devant être utilisées.

Encore un objectif de la présente invention est de proposer un tel procédé qui permette de réduire nettement la quantité de résidus solides produits, tels que des boues constituées de charbon actif et de matières adsorbées nécessitant des étapes coûteuses de traitement ultérieures, par exemple d'épaississement et de déshydratation .

Encore un autre objectif de la présente invention est de décrire un tel procédé qui, dans au moins certains de ses modes de réalisation, permette de réduire la fréquence de lavage des membranes avec des produits chimiques et donc la consommation de tels produits chimiques.

Encore un autre objectif de la présente invention est de divulguer un tel procédé qui permette, dans au moins certains de ses modes de réalisation, d'empêcher la formation de sous-produits nocifs issus de l'ozone et donc d'éviter que de tels sous-produits se retrouvent dans l'eau traitée.

### Description détaillée de l'invention

Ces différents objectifs, ou à tout le moins certains d'entre eux, sont atteints grâce à l'invention qui concerne un procédé de traitement d'eau en vue d'en abattre la teneur en matières organiques, en micropolluants et en agents pathogènes comprenant :
une étape d'amenée d'eau à traiter par une canalisation directement dans un réacteur membranaire contenant au moins une membrane immergée de filtration,
une étape de mise en contact de ladite eau avec un matériau adsorbant dans ledit réacteur membranaire,
une étape de filtration par ladite au moins une membrane immergée de ladite eau contenant ledit matériau adsorbant dans ledit réacteur membranaire,
l'agitation dudit mélange d'eau et de matériau adsorbant au sein dudit réacteur membranaire durant ladite étape de filtration,
une étape d'extraction d'eau traitée,
caractérisé en ce que :
   ledit matériau adsorbant est constitué de micro-grains de charbon actif présentant une densité réelle d'au moins 0,45, une vitesse de décantation de 30 à 50 m/H, une surface spécifique de 400 à 2500 m²/g, préférentiellement entre 1500 et 2500 m²/g, et une granulométrie moyenne comprise entre 600 et 1300 µm, moins de 5 % en volume desdits grains présentant un taille inférieure à 400 µm,
   en ce que la concentration desdits micro-grains de charbon actif dans ledit réacteur membranaire est maintenue entre 5 et 100 g/L, préférentiellement entre 5 et 50 g/L,
   en ce qu'aucun autre matériau granulaire ou particulaire autre que les micro-grains de charbon actif n'est mis en œuvre au sein dudit réacteur,
   l'agitation dudit mélange d'eau et desdits micro-grains de charbon actif au sein dudit réacteur membranaire durant ladite étape de filtration étant au moins en partie effectuée par injection d'air dans ledit mélange à raison de 30 à 60 Nm³/m².H et étant suffisamment importante pour éviter le dépôt de micro-grains de charbon actif sur ladite au moins une membrane de filtration.

Les micro-grains de charbon actif mis en œuvre dans le cadre de la présente invention sont disponibles sur le marché. Ils ne répondent , en terme de granulométrie, ni à la définition classique d'un charbon actif en poudre (CAP) - qui comme indiqué ci-dessus, selon une définition communément admise par l'homme de l'art est constitué de particules présentant une taille moyenne comprise entre 5 µm et 50 µm, préférentiellement entre 15 µm et 25 µm -, ni à la définition classique d'un charbon actif en grains (CAG) - qui, selon une définition communément admise par l'homme de l'art, est constitué de particules de charbon présentant une taille moyenne comprise entre 1 mm et 3 mm -. Ainsi, de tels micro-grains présentent une granulométrie moyenne inférieure à celle du CAG et bien plus importante que celle du CAP. A ce sujet, on entend par « granulométrie moyenne » la granulométrie pour laquelle 50 % (en volume) des particules sont plus grosses et 50 % (en volume) des particules sont plus petites.

Ils présentent par ailleurs des surfaces spécifiques du même ordre que celles du CAP et plus importantes que celles du CAG qui permettent une excellente adsorption de la matière organiques et des micropolluants. Ils présentent aussi l'avantage d'être auto-drainants et donc de pouvoir être égouttés très facilement et très rapidement, par exemple grâce à de simples sacs filtrants, après avoir été utilisés en mélange avec une eau à traiter. Contrairement au charbon actif en poudre, ils présentent aussi l'avantage de pouvoir être régénérés facilement grâce à des procédés, généralement thermiques, permettant de désorber et de minéraliser la matière organique et les micropolluants adsorbée à leur surface.

Selon l'invention, les micro-grains de charbon actif utilisés à titre de matériau adsorbant pour adsorber la matière organique permettent de façon surprenante de s'affranchir de l'utilisation concomitante de particules polymériques pour éviter le colmatage et l'abrasion des membranes organiques. Comme indiqué précédemment, selon l'art antérieur, le charbon actif en poudre est un matériau connu pour avoir les inconvénients cumulés d'obstruer les pores de membranes et d'endommager celles-ci. L'homme de l'art était donc incité à faire en sorte de protéger les membranes du contact direct avec le charbon actif.

Or, la solution ici proposée vient complètement à l'encontre d'une telle incitation. En effet, selon l'invention les membranes sont bien exposées à un contact direct avec le charbon actif.

Les inventeurs ont constaté que, de façon surprenante, les micro-grains de charbon actif sélectionnés pour la mise en œuvre de l'invention présentaient non seulement une taille moyenne suffisamment importante pour ne pas boucher les pores de la membrane mais surtout que le milieu constitué du mélange agité d'eau et de ces micro-grains ne provoquait pas de dépôt de ceux-ci sur la surface de ces membranes sous la forme d'une gâteau qui les colmateraient comme l'homme de l'art pouvait s'y attendre.

En dépit du contact direct des membranes avec du charbon actif, les inconvénients de l'art antérieur inhérent à un tel contact ne se produisent pas dans le cadre du procédé selon l'invention. Ce résultat est dû aux caractéristiques de l'invention selon lesquelles le charbon actif est utilisé sous forme de micro-grains ayant des caractéristiques spécifiques de granulométrie, de surface spécifiques, de vitesse de décantation et de densité et selon lesquelles le mélange d'eau et de micro-grains est suffisamment agité pour empêcher les micro-grains de charbon actif de se déposer sur les membranes.

Il s'ensuit que, grâce au procédé selon l'invention, il est beaucoup moins souvent nécessaire de procéder à des opérations de lavage des membranes que dans les techniques de l'art antérieur et notamment celle selon FR3015463A1.

Par ailleurs, les quantités de micro-grains de charbon actif venant se déposer sur les membranes étant très faibles, l'essentiel de ces micro-grains continue de remplir sa fonction d'adsorption pendant un maximum de temps. En conséquence, une économie est faite sur les quantités de charbon actif devant être mises en œuvre par rapport aux techniques mettant en œuvre du charbon actif en poudre, celui-ci devant moins souvent être renouvelé que dans ces procédés de l'art antérieur.

Ainsi, grâce au procédé selon l'invention, les quantités de charbon actif épuisé et les matières en suspension provenant du lavage des membranes devant être purgées du réacteur sont moins importantes que dans les techniques de l'art antérieur notamment celle selon FR3015463A1. Le charbon actif en micro-grains étant de plus, contrairement au CAP, régénérable, les quantités de résidus secs provenant du traitement de ces boues sont beaucoup moins importantes.

On notera que l'injection d'air dans le réacteur pourra être intermittente mais qu'elle sera préférentiellement continue de façon à contribuer continûment à la conservation de l'intégrité des membranes.

Dans un mode de réalisation particulièrement avantageux de l'invention, le procédé selon celle-ci comprend en outre une étape d'injection d'ozone dans l'eau transitant dans ladite canalisation d'amenée d'eau à traiter audit réacteur membranaire, ladite étape d'injection étant effectuée par un injecteur à effet venturi.

L'utilisation d'ozone permet d'oxyder une partie des molécules présentes dans l'eau à traiter. Elle permet notamment d'améliorer l'élimination des perturbateurs endocriniens et résidus de médicaments. L'ozonation permet en outre de fragmenter des molécules organiques de taille importante en molécules plus petites, ce qui facilite leur adsorption et leur élimination ultérieures. L'ozonation permet enfin d'éliminer certaines toxines algales ou des molécules malodorantes. Les inventeurs ont également constaté que dans le cadre du procédé selon la présente invention, l'apport d'ozone permettait une réactivation des sites d'adsorption des micro-grains de charbon actif et contribuait ainsi à l'optimisation de l'efficacité de ce matériau.

Selon cette caractéristique préférentielle de l'invention, injection d'ozone est réalisée par l'aspiration générée par un effet Venturi, ce qui a pour avantage d'éviter toute fuite d'ozone dans l'atmosphère et permet de le mélanger avec l'eau. L'effet Venturi est un effet d'aspiration généré par un fluide en mouvement qui subit une dépression. Ainsi, par l'effet Venturi, l'eau à traiter subit une dépression qui va permettre l'aspiration de l'ozone dans l'eau. Grâce à cette technique, l'intégralité de l'ozone injecté est incorporée et mélangée dans l'eau à traiter. Il est donc possible d'utiliser des quantités réduites d'ozone par rapport aux techniques connues de l'art antérieur.

De préférence, l'ozone est injecté à raison de 0,5 à 10 mg/L, préférentiellement 1 à 3 mg/L.

Selon une variante de la présente invention, une étape de recirculation du mélange d'eau et desdits micro-grains de charbon actif dans ledit réacteur membranaire contribue aux côtés de l'injection d'air dans le réacteur à l'agitation dudit mélange.

Selon une variante préférentielle de l'invention, la concentration desdits micro-grains de charbon actif dans ledit réacteur membranaire est maintenue entre 5 et 100 g/L, préférentiellement entre 5 et 50 g/L.

Préférentiellement, le procédé comprend aussi une étape d'extraction dudit réacteur de charbon actif en micro-grains usité, et une étape d'égouttage de ce charbon actif usité et une étape de régénération du charbon actif égoutté.

Le charbon actif en micro-grains utilisé dans le cadre de la présente invention présente en effet l'avantage, quand il est usité c'est-à-dire saturé de matières organiques adsorbées, de pouvoir être débarrassé de plus de 80 % de l'eau qu'il contient par un simple égouttage, et donc de présenter après ce simple égouttage un taux d'humidité inférieur à 20 % en poids. Un tel simple égouttage pourra notamment être effectué grâce à des sacs. Le charbon actif en micro-grains ainsi égoutté peut ensuite subir une phase de régénération, préférentiellement par voie thermique afin de rétablir l'essentiel de ses capacités d'adsorption d'origine, et de pouvoir être réutilisé dans le cadre du procédé selon l'invention. L'apport de matériau neuf est ainsi limité, ce qui contribue à diminuer les couts de mise en œuvre du procédé selon l'invention par rapport aux coûts des procédés de l'art antérieur.

### Description d'un mode de réalisation

Le procédé va maintenant être décrit plus en détails grâce à la description qui suit d'un mode de réalisation non limitatif de celui-ci donnée en référence à :

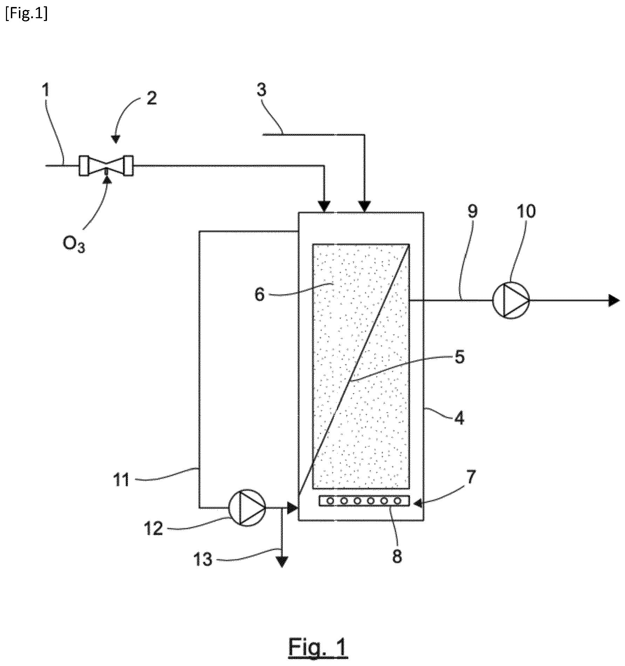

la figure 1 qui représente de façon schématique une installation permettant la mise en œuvre du procédé selon l'invention.

Selon la figure 1, l'installation comprend une canalisation 1 d'amenée d'eau à traiter débouchant dans un réacteur 4 logeant un module de filtration membranaire.

Des moyens d'injection d'ozone, plus précisément un injecteur 2 à effet Venturi permettent d'injecter de l'ozone O₃ dans la canalisation 1 d'amenée d'eau à traiter, afin de faire subir à cette eau une étape d'ozonation. Cette étape d'ozonation permet d'oxyder les polluants contenus dans l'eau à traiter. Elle permet également de fragmenter les macromolécules facilitant leur adsorption sur un matériau pulvérulent adsorbant.

Le module de filtration contenu dans le réacteur 4 est composé de membranes immergées 5 en matériau organique MYCRODYN BIO-CEL ^{®}On notera que, selon les modes de réalisation les membranes pourront être des membranes de microfiltration ou d'ultrafiltration ou de de nanofiltration.

Des moyens d'apport 3 d'un matériau adsorbant sont prévus dans la partie supérieure du réacteur 4 et permettent d'apporter dans celui-ci un matériau adsorbant destiné à adsorber la matière organique présente dans l'eau à traiter.

Selon l'invention, ce matériau adsorbant particulaire est constitué de micro-grains 6 de charbon actif présentant :
- une densité réelle de 0,45;
- une vitesse de décantation de 30 à 40 m/H ;
- une surface spécifique de 1500 à 2500 m²/g,
- une granulométrie moyenne comprise entre 600 µm et 1300 µm, moins de 5 % desdits grains présentant un taille inférieure à 400 µm,

Ce charbon actif en micro-grains est présent dans le réacteur 4 selon une quantité déterminée de manière telle que la concentration de micrograins de charbon actif dans le réacteur membranaire 4 est comprise entre 5 g/L et 50 g/L.

L'installation comprend par ailleurs des moyens d'injection 7 d'air, dans le réacteur 40. Ces moyens d'injection comprennent ici une rampe d'injection 8 située dans la partie inférieure du réacteur 4, sous le module de filtration membranaire, reliée à un réseau d'amenée d'air (non représenté). Dans le cadre du procédé selon la présente invention ces moyens sont mis en œuvre pour amener l'air dans le réacteur 4 à raison de 50 Nm³/m².H. L'air injecté permet de mettre en suspension le charbon actif en grain dans l'eau à traiter afin que sa répartition soit essentiellement uniforme au sein du réacteur 4 mais aussi d'agiter le mélange d'eau et de micro-grains.

L'utilisation conjointe de micro-grains de charbon actif 6 et d'une agitation adéquate du mélange d'eau les contenant permet d'une part d'empêcher le dépôt de ces micro-grains sur la surface des membranes mais aussi de décoller de manière douce les matières organiques qui se seraient déposées à la surface des membranes, et ce sans endommager celles-ci.

L'eau mélangée au charbon actif passe à travers le module de filtration afin de séparer l'eau traitée du charbon actif sur lequel s'adsorbe les matières organiques présentes dans l'eau. L'eau traitée est ainsi évacuée par une canalisation 9 munie d'une pompe 10.

L'installation comprend également une boucle de recirculation 11 sur laquelle se trouve une pompe de recirculation 12 et une purge 13. La purge 13 permet d'évacuer du réacteur 4 les boues en excès constituées de charbon actif en micro grains alourdi par la matière organique qui s'y est adsorbée.

L'entrée de la canalisation de recirculation 11 se trouve en partie supérieure du réacteur 4 alors que sa sortie débouche en partie inférieure de celui-ci formant ainsi une boucle de recirculation. Cette boucle permet de recirculer, au moins en partie, le mélange d'eau et de charbon actif en micro-grains contenu dans le réacteur à l'intérieur de celui-ci, cette recirculation permet de générer une agitation complémentaire dans le réacteur.

Dans ce mode de réalisation, l'agitation à l'intérieur du réacteur est maintenue en continue.

Grâce à l'utilisation de micro-grains de charbon actif répondant aux caractéristiques indiquées ci-dessus et correctement agité il est ainsi possible d'empêcher d'endommager les membranes par le charbon actif et d'empêcher que le charbon actif ne se dépose sous forme de gâteau sur les membranes. Il est donc possible de procéder moins souvent au lavage chimique de celles-ci et ainsi de moins utiliser de produits chimiques à cette fin. L'utilisation de charbon actif en micro-grains conduit à la production de moins de boues que les procédés mettant en œuvre du charbon actif et des billes de polymère. En effet, ce charbon actif en micro-grains est facilement régénérable. Il peut aussi être davantage recyclé dans le réacteur, grâce à l'injection d'ozone dans l'eau à traiter, ce composé permettant comme indiqué ci-dessus de réactiver les sites d'adsorption de ce matériau.

## Revendications

1. Procédé de traitement d'eau en vue d'en abattre la teneur en matières organiques, en micropolluants et en agents pathogènes comprenant :
une étape d'amenée d'eau à traiter par une canalisation directement dans un réacteur membranaire contenant au moins une membrane immergée de filtration,
une étape de mise en contact de ladite eau avec un matériau adsorbant dans ledit réacteur membranaire,
une étape de filtration par ladite au moins une membrane immergée de ladite eau contenant ledit matériau adsorbant dans ledit réacteur membranaire,
l'agitation dudit mélange d'eau et de matériau adsorbant au sein dudit réacteur membranaire durant ladite étape de filtration,
une étape d'extraction d'eau traitée,
**caractérisé en ce que** :
ledit matériau adsorbant est constitué de micro-grains de charbon actif présentant une densité réelle d'au moins 0,45, une vitesse de décantation de 30 à 50 m/H, une surface spécifique de 400 à 2500 m²/g, préférentiellement entre 1500 et 2500 m²/g et une granulométrie moyenne comprise entre 600 et 1300 µm, moins de 5 % en volume desdits grains présentant un taille inférieure à 400 µm,
**en ce que** la concentration desdits micro-grains de charbon actif dans ledit réacteur membranaire est maintenue entre 5 et 100 g/L, préférentiellement entre 5 et 50 g/L,
**en ce qu'**aucun autre matériau granulaire ou particulaire autre que les micro-grains de charbon actif n'est mis en œuvre au sein dudit réacteur,
l'agitation dudit mélange d'eau et desdits micro-grains de charbon actif au sein dudit réacteur membranaire durant ladite étape de filtration étant au moins en partie effectuée par injection d'air dans ledit mélange à raison de 30 à 60 Nm³/m².H et étant suffisamment importante pour éviter le dépôt de micro-grains de charbon actif sur ladite au moins une membrane de filtration.

2. Procédé selon la revendication 1 **caractérisé en ce qu'**il comprend une étape d'injection d'ozone dans l'eau transitant dans ladite canalisation d'amenée d'eau à traiter audit réacteur membranaire, ladite étape d'injection étant effectuée par un injecteur à effet Venturi.

3. Procédé selon la revendication 2 **caractérisé en ce que** l'ozone est injecté à raison de 0,5 à10 mg/L, préférentiellement 1 à 3 mg/L.

4. Procédé selon l'une des revendications 1 à 3 **caractérisé en ce que** ladite injection d'air dans le réacteur membranaire est continue.

5. Procédé selon l'une des revendications 1 à 3 **caractérisé en ce que** ladite injection d'air dans le réacteur membranaire est séquencée.

6. Procédé selon l'une des revendications 1 à 5 **caractérisé en ce qu'**il comprend une étape de recirculation du mélange d'eau et desdits micro-grains de charbon actif dans ledit réacteur membranaire contribuant à l'agitation dudit mélange.

7. Procédé selon l'une quelconque des revendications 1 à 6 **caractérisé en ce qu'**il comprend une étape d'extraction dudit réacteur de charbon actif en micro-grains usité, une étape d'égouttage de ce charbon actif usité et une étape de régénération du charbon actif égoutté.

## Patentansprüche

1. Verfahren zu Wasseraufbereitung, um den Gehalt an organischen Stoffen, Mikroverunreinigungen und Krankheitserregern zu reduzieren, umfassend:
einen Schritt des Zuführens von zu behandelndem Wasser durch eine Rohrleitung direkt in einen Membranreaktor, der mindestens eine Tauchfiltermembran enthält,
einen Schritt des In-Kontakt-Bringens des Wassers mit einem adsorbierenden Material in dem Membranreaktor,
einen Schritt des Filterns durch die mindestens eine Tauchmembran des Wassers, umfassend das adsorbierende Material, in dem Membranreaktor,
Rühren des Gemischs aus Wasser und adsorbierendem Material im Inneren des Membranreaktors während des Schritts des Filterns,
einen Schritt des Entnehmens von aufbereitetem Wasser,
**dadurch gekennzeichnet, dass**:
das adsorbierende Material aus Mikrokörnern von Aktivkohle besteht, die eine tatsächliche Dichte von mindestens 0,45, eine Absetzgeschwindigkeit von 30 bis 50 m/h, eine spezifische Oberfläche von 400 bis 2500 m²/g, vorzugsweise zwischen 1500 und 2500 m²/g, und eine mittlere Granulometrie im Bereich zwischen 600 und 1300 µm aufweisen, wobei weniger als 5 Vol.-% der Körner eine Größe von unter 400 µm aufweisen.
und dadurch, dass die Konzentration der Mikrokörner von Aktivkohle in dem Membranreaktor zwischen 5 und 100 g/l, vorzugsweise zwischen 5 und 50 g/l beibehalten wird, und dadurch, dass kein anderes granuläres oder partikuläres Material als die Mikrokörner von Aktivkohle im Inneren des Reaktors eingesetzt wird,
wobei das Rühren des Gemischs aus Wasser und den Mikrokörnern von Aktivkohle im Inneren des Membranreaktors während des Schritts des Filterns mindestens teilweise durch Injizieren von Luft in das Gemisch mit einer Rate von 30 bis 60 Nm³/m²·h erfolgt und umfangreich genug ist, um die Ablagerung von Mikrokörnern von Aktivkohle auf der mindestens einen Filtermembran zu verhindern.

2. Verfahren nach Anspruch 1, **dadurch gekennzeichnet, dass** es einen Schritt des Injizierens von Ozon in das Wasser umfasst, das in der Zufuhrrohrleitung von zu behandelndem Wasser in den Membranreaktor fließt, wobei der Schritt des Injizierens durch einen Injektor mit Venturi-Effekt durchgeführt wird.

3. Verfahren nach Anspruch 2, **dadurch gekennzeichnet, dass** das Ozon mit einer Rate von 0,5 bis 10 mg/l, vorzugsweise 1 bis 3 mg/l, injiziert wird.

4. Verfahren nach einem der Ansprüche 1 bis 3, **dadurch gekennzeichnet, dass** das Injizieren von Luft in den Membranreaktor kontinuierlich erfolgt.

5. Verfahren nach einem der Ansprüche 1 bis 3, **dadurch gekennzeichnet, dass** das Injizieren von Luft in den Membranreaktor sequenziell erfolgt.

6. Verfahren nach einem der Ansprüche 1 bis 5, **dadurch gekennzeichnet, dass** es einen Schritt des Rezirkulierens des Gemischs aus Wasser und den Mikrokörnern von Aktivkohle in dem Membranreaktor umfasst, der zum Rühren des Gemischs beiträgt.

7. Verfahren nach einem der Ansprüche 1 bis 6, **dadurch gekennzeichnet, dass** es einen Schritt des Entnehmens gebrauchter mikrokörniger Aktivkohle aus dem Reaktor, einen Schritt des Ablassens dieser gebrauchten Aktivkohle und einen Schritt der Regenerierens der abgelassenen Aktivkohle umfasst.

## Claims

1. Method for treating water for the purpose of reducing the content of organic matter, of micropollutants and of pathogenic agents therein, which method comprises:
a step of supplying water to be treated via a pipe directly into a membrane reactor containing at least one submerged filtration membrane,
a step of bringing said water in contact with an adsorbent material in said membrane reactor,
a step of filtering by said at least one submerged membrane said water containing said adsorbent material in said membrane reactor,
stirring said mixture of water and adsorbent material within said membrane reactor during said filtration step,
a step of extracting treated water,
**characterised in that**:
said adsorbent material consists of micrograins of activated carbon having a real density of at least 0.45, a settling velocity of 30 to 50 m/H, a specific surface area of 400 to 2500 m²/g, preferably between 1500 and 2500 m²/g, and an average particle size of between 600 and 1300 µm, less than 5% by volume of said grains having a size of less than 400 µm,
**in that** the concentration of said activated carbon micrograins in said membrane reactor is maintained between 5 and 100 g/L, preferably between 5 and 50 g/L,
and **in that** no other granular or particulate material other than the activated carbon micrograins is used in said reactor,
the stirring of said mixture of water and said activated carbon micrograins in said membrane reactor during said filtration step being at least partially carried out by air injection into said mixture at a rate of 30 to 60 Nm³/m².H and being sufficiently vigorous to avoid the deposit of activated carbon micrograins on said at least one filtration membrane.

2. Method according to claim 1, **characterised in that** it comprises a step of injecting ozone into the water passing through said pipe supplying the water to be treated to said membrane reactor, said injection step being carried out by a Venturi injector.

3. Method according to claim 2, **characterised in that** ozone is injected at a rate of 0.5 to 10 mg/L, preferably 1 to 3 mg/L.

4. Method according to one of claims 1 to 3, **characterised in that** said injection of air into the membrane reactor is continuous.

5. Method according to one of claims 1 to 3, **characterised in that** said injection of air into the membrane reactor is sequenced.

6. Method according to one of claims 1 to 5, **characterised in that** it comprises a step of recirculating the mixture of water and said activated carbon micrograins within said membrane reactor contributing to the stirring of said mixture.

7. Method according to any of claims 1 to 6, **characterised in that** it comprises a step of extracting spent microgranular activated carbon from said reactor, a step of draining this spent activated carbon, and a step of regenerating the drained activated carbon.
